# EUROPEAN PATENT APPLICATION

(11) **EP 3 202 593 A1**
(43) Date of publication of application: **09.08.2017**
(21) Application number: 15846938.7
(22) Date of filing: 25.09.2015
(51) Int. Cl.: B60C 11/16, B60C 11/12

(54) **PNEUMATIC TIRE**

(30) Priority: 29.09.2014 JP 2014199184
(71) Applicant: The Yokohama Rubber Co., Ltd., Minato-ku Tokyo 105-8685 (JP)
(72) Inventor: ENDO, Hiroki, Hiratsuka-shi, Kanagawa 254-8601 (JP)
(74) Representative: Dilg, Haeusler, Schindelmann Patentanwaltsgesellschaft mbH
(86) International application number: PCT/JP2015/077063
(87) International publication number: WO 2016/052322

(57) **Abstract**

A pneumatic tire is provided whereby, when stud pins are driven into stud pin holes, the stud pins are prevented from dropping out and performance on snow and ice is enhanced to or beyond conventional levels.

The pneumatic tire includes, in a tread, a plurality of blocks (2) divided by grooves (6) extending in a tire circumferential direction and grooves (7) extending in a tire width direction, and a plurality of sipes (4) and a stud pin hole (3) disposed in the blocks (2). In such a tire, at least a portion of the sipes (4) provided in a peripheral area (A) of the stud pin hole (3) comprises a raised bottom portion.

## Description

### Technical Field

The present invention relates to a pneumatic tire into which stud pins can be driven.

### Background Art

In areas with severe winters such as Northern Europe and Russia, pneumatic studded tires (spike tires) are primarily used as winter tires. Such studded tires have a configuration in which stud pin holes are disposed in a plurality of blocks of tread, and stud pins are driven into these stud pin holes. The stud pins embedded in the tread scratch icy and snowy road surfaces and thereby improve driving performance (performance on snow and ice) such as braking ability, driveability, and the like.

However, stud pins sometimes drop out due to use over an extended period of time or use in extreme conditions such as traveling on dry road surfaces and the like. Problems occur when stud pins drop out such as performance on snow and ice declining and the environment around the road being degraded by the dropped stud pins.

Additionally, a plurality of sipes is formed in the blocks of tread of a studded tire in order to further enhance performance on snow and ice. Patent Document 1 proposes technology for preventing the dropping out of stud pins by forming a region without sipes around the stud pin hole and forming stud pin periphery slits near the stud pin hole.

However, demand for performance of studded tires has increased in recent years and there are needs to further prevent stud pins from dropping out and enhance performance on snow and ice beyond conventional levels.

### Citation List

### Patent Literature

Patent Document 1: Japanese Patent No. 5098383B

### Summary of Invention

### Technical Problem

An object of the present invention is to provide a pneumatic tire whereby, when stud pins are driven into stud pin holes, the stud pins are prevented from dropping out and performance on snow and ice is enhanced to or beyond conventional levels.

### Solution to Problem

A pneumatic tire that achieves the object described above includes, in a tread, a plurality of blocks divided by grooves extending in a tire circumferential direction and grooves extending in a tire width direction, and a plurality of sipes and a stud pin hole disposed in the blocks. In such a pneumatic tire, at least a portion of the sipes provided in a peripheral area of the stud pin hole comprises a raised bottom portion.

### Advantageous Effects of Invention

According to the pneumatic tire of the present invention, a configuration is given in which the sipes in the peripheral area around the stud pin hole are provided with a raised bottom portion. As such, rigidity of the peripheral area around the stud pin hole is increased. As a result, movement of the stud pin when external forces are applied is suppressed and pin dropping is prevented. Additionally, at the same time, collapsing of the stud pin is prevented and, thus, performance on snow and ice can be enhanced to or beyond conventional levels.

It is preferable that the peripheral area is located in a range of a 12 mm diameter from a center of the stud pin hole, and a total of lengths of the sipes in the peripheral area where the raised bottom portion is provided is not less than 60% of an entire length of the sipes provided in the peripheral area. In such a configuration, pin dropping can be further prevented.

It is preferable that a maximum height h of the raised bottom portion of the sipes with respect to a distance L from a surface of the corresponding block to a bottom of the stud pin hole is not less than 0.3L and not greater than 0.8L. In such a configuration, both pin release resistance performance and performance on snow and ice can be achieved in a well-balanced manner.

### Brief Description of Drawings

FIG. 1 is an explanatory drawing schematically illustrating a block of tread of a pneumatic tire according to an embodiment of the present invention.
FIG. 2 is a side view illustrating an example of a stud pin to be driven into a pneumatic tire according to an embodiment of the present invention.
FIGS. 3A to 3C are enlarged explanatory drawings illustrating an area including a stud pin hole of a pneumatic tire according to an embodiment of the present invention. FIG. 3A is a top view, FIG. 3B is a cross-sectional view taken along dashed line X-X in FIG. 3A, and FIG. 3C is a cross-sectional view taken along dashed line Y-Y in FIG. 3A.
FIGS. 4A to 4C are cross-sectional views equivalent to FIG. 3B of stud pin holes of pneumatic tires according to other embodiments of the present invention.
FIGS. 5A to 5C are cross-sectional views equivalent to FIG. 3B of stud pin holes of pneumatic tires according to still other embodiments of the present invention.
FIGS. 6A to 6C are cross-sectional views equivalent to FIG. 3C of stud pin holes of pneumatic tires according to still other embodiments of the present invention.
FIGS. 7A and 7B are enlarged explanatory drawings illustrating an area including a stud pin hole of a conventional pneumatic tire. FIG. 7A is a top view, and FIG. 7B is a cross-sectional view taken along dashed line Z-Z in FIG. 7A.

### Description of Embodiments

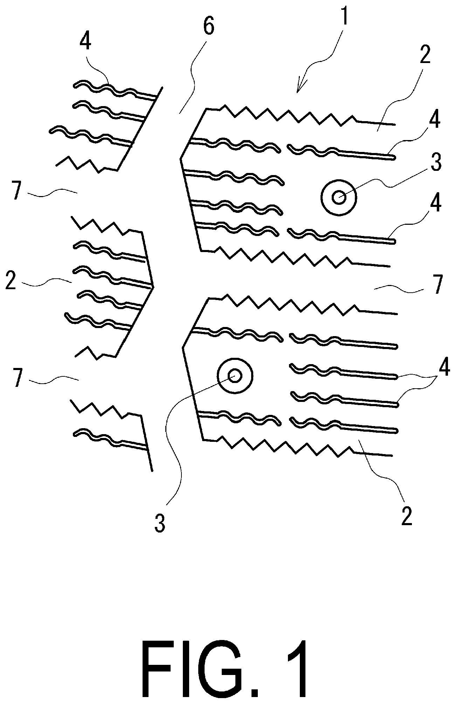

FIG. 1 is an explanatory drawing illustrating a pneumatic tire according to an embodiment of the present invention, and is a top view schematically illustrating a portion of tread prior to stud pins being driven in. In FIG. 1, a plurality of blocks 2 are disposed in a tread 1 of the pneumatic tire. The plurality of blocks 2 are divided by a groove 6 extending in the tire circumferential direction and grooves 7 extending in the tire width direction The groove 6 extending in the tire circumferential direction may extend in substantially the tire circumferential direction or may be inclined with respect to the circumferential direction. The groove 6 may have a straight shape or a bent or zigzag shape. The grooves 7 extending in the tire width direction may extend in substantially the tire width direction and, optionally, may be inclined. These grooves 7 may have a straight shape or a bent or zigzag shape.

A plurality of sipes 4 and a stud pin hole 3 are disposed in the blocks 2. The sipes 4 preferably extend in the tire width direction, and may be formed in straight, wave-like, or zigzag shapes. The stud pin hole 3 can by disposed in a portion or all of the plurality of blocks 2, and two or more of the stud pin holes 3 may be disposed in one block 2. Additionally, it is preferable that the sipes 4 do not extend to locations near the stud pin hole 3. A distance between the stud pin hole 3 and the sipes 4 may be appropriately determined on the basis of the size and position on the blocks 2 of the stud pin hole 3 and sipes 4.

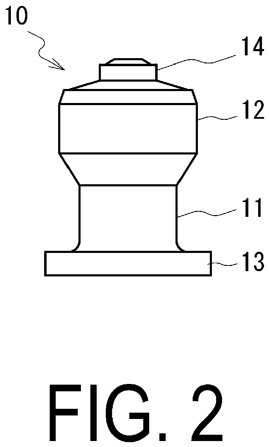

Excellent performance on snow and ice can be obtained by driving a stud pin 10 such as that illustrated in FIG. 2 into the stud pin holes 3 formed in a vulcanized pneumatic tire. FIG. 2 illustrates a double flange type stud pin 10 that includes a cylindrical body portion 11, a road contact surface side flange portion 12, a bottom side flange portion 13, and a tip portion 14. The road contact surface side flange portion 12 is formed on the road contact surface side (outward in the tire radial direction) of the body portion 11 with the diameter of the road contact surface side flange portion 12 being larger than that of the body portion 11. The tip portion 14 is formed from a material that is harder than the material of other constituent members and projects in the pin axial direction from the road contact surface side flange portion 12. The bottom side flange portion 13 is formed on the bottom side (inward in the tire radial direction) of the body portion 11 with the diameter of the bottom side flange portion 13 being larger than that of the body portion 11. Note that the shape of the stud pin 10 is not limited to this example and a single flange type stud pin may also be used. Additionally, the stud pin 10 may by cylindrical or prismatic.

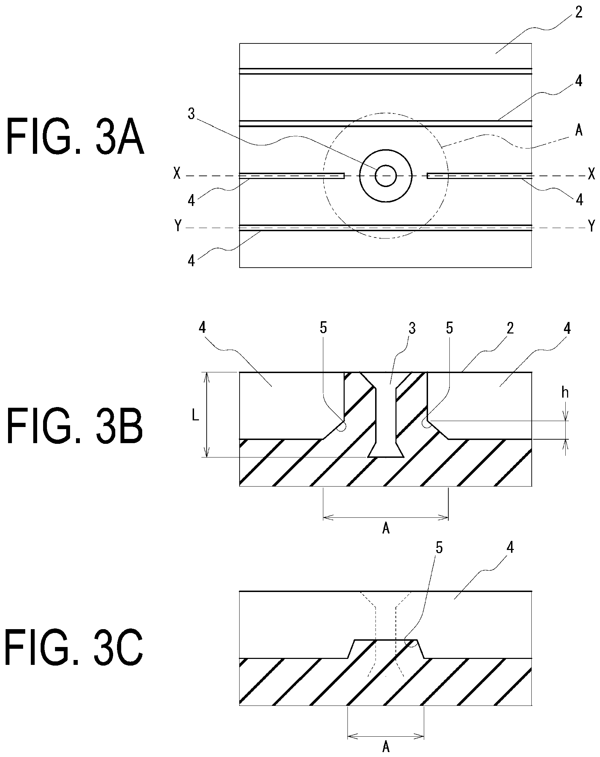

FIGS. 3A to 3C are explanatory drawings illustrating an area including the stud pin hole of a pneumatic tire according to an embodiment of the present invention. FIG. 3A is a top view of the stud pin hole 3, as seen from above. Note that, in FIG. 3A, the sipes 4 are depicted as straight lines to facilitate understanding. Description of reference numerals that are the same as those in FIG. 1 is omitted (the same applies for the following drawings). FIG. 3B is a cross-sectional view taken along dashed line X-X of FIG. 3A, which crosses the stud pin hole 3 and is taken along one of the sipes 4. FIG. 3C is a cross-sectional view taken along dashed line Y-Y of FIG. 3A, which passes through a peripheral area A of the stud pin hole 3 and is taken along one of the sipes 4.

In FIG. 3A, four of the sipes 4 are present in the peripheral area A around the stud pin hole 3. End portions of two of the sipes are in the peripheral area A of the stud pin hole 3, and these sipes extend outward in the radiation direction of the stud pin hole 3. The other two sipes are disposed separated from the stud pin hole 3 and extend continuously so as to pass through the peripheral area A. At least a portion of these four sipes include a raised bottom in the peripheral area A.

FIG. 3B is a cross-sectional view taken along the center of the stud pin hole 3 and a substantially center line of the two sipes 4. The bottom side of the stud pin hole 3 is provided with an enlarged portion so as to correspond to the bottom side flange portion 13 of the stud pin 10. The enlarged portion of the example illustrated in FIG. 3B has a truncated cone shape, but the shape of the enlarged portion is not limited thereto. Furthermore, the bottom side may be free of the enlarged portion.

In FIG. 3B, raised bottom portions 5 are formed at the end portions of the sipes 4 facing the stud pin hole 3 so as to chamfer the corner portions thereof. By forming the raised bottom portions 5, rigidity around the enlarged portion on the bottom side of the stud pin hole 3 can be increased. As a result, the force tightening the stud pin 10 that has been driven into the stud pin hole 3 becomes stronger, movement of the stud pin 10 can be prevented when external forces act thereupon when braking, accelerating, or cornering, and pin dropping can be prevented. Additionally, at the same time, collapsing of the stud pin 10 in the block 2 is prevented and, thus, performance on snow and ice can be enhanced to or beyond conventional levels.

Likewise, as illustrated in FIG. 3C, a portion of the sipes 4 that continuously extend through the peripheral area A of the stud pin hole 3 and are disposed separated from the stud pin hole 3 are provided with a raised bottom. In the example illustrated in FIG. 3C, the bottom of the sipe 4 in the range of the peripheral area A is raised in a trapezoidal shape in order to form the raised bottom portion 5. By forming this raised bottom portion in the range of the peripheral area A, rigidity around the enlarged portion on the bottom side of the stud pin hole 3 can be increased.

In FIG. 3B, the shape of the raised bottom portions of the sipe 4 is configured to chamfer the corner portion (edge portion) thereof. That is, the raised bottom portion 5 is formed by removing the edge portion at the bottom side of the end portion of the sipe 4 in a triangular manner. The size of the raised bottom portion 5 is not particularly limited, but, different from a typical chamfer or inclined side (flank face) formed at the end portion of sipe 4, the raised bottom portion 5 is preferably of a size sufficient to increase rigidity around the bottom portion of the stud pin hole 3. Typically, a sipe is formed by inserting a thin blade at a siping position on the inner surface of a vulcanization mold and vulcanizing the pneumatic tire. In consideration of workability and damage to the sipe when molding the pneumatic tire, the edge of this blade is typically provided with a chamfer with a curvature radius of 2 mm or less and a side of the end portion is typically provided with an inclined side with a clearance angle of 12° or smaller. In the present invention, the raised bottom portion 5 is a larger recessed portion that differs from the corner portions typically formed by the chamfer and inclined side described above.

The raised bottom portion 5 may be formed in all of the sipes 4 extending inside the peripheral area A of the stud pin hole 3, or may be formed in a portion of the sipes 4 inside the peripheral area A. A total of the lengths of the sipes in the peripheral area A where the bottom is raised is preferably 60% or greater, more preferably 80% or greater, and even more preferably 85% or greater of the entire length of the sipes 4 present in the peripheral area A. When the total of the lengths of the raised bottom portions 5 in the peripheral area A is in this range, pin dropping can be prevented even further. Here, the peripheral area A is configured as a range with a diameter of 12 mm from the center of the stud pin hole 3, and the length of the sipes 4 is a length in the longitudinal direction of the sipes. Additionally, the raised bottom portion 5 is configured as the distance from the rise from the bottom side of the sipe 4 to the side of the end portion or to the rise from the other bottom side of the sipe 4. Note that the raised bottom portion 5 may extend outside the peripheral area A.

A maximum height h of the raised bottom portion 5 with respect to a distance L from a surface of the block 2 to a bottom of the stud pin hole 3 is preferably not less than 0.3L and not greater than 0.8L, more preferably not less than 0.4L and not greater than 0.75L, and even more preferably not less than 0.5L and not greater than 0.7L. If the height h of the raised bottom portion 5 is less than 0.3L, it will not be possible to sufficiently increase the holding force of the stud pin 10, which may result in the effects of preventing the stud pin 10 from dropping out being inadequate. Additionally, if the height h of the raised bottom portion 5 exceeds 0.8L, it will not be possible to secure the volume of the sipe 4, which may result in reduced performance on snow and ice.

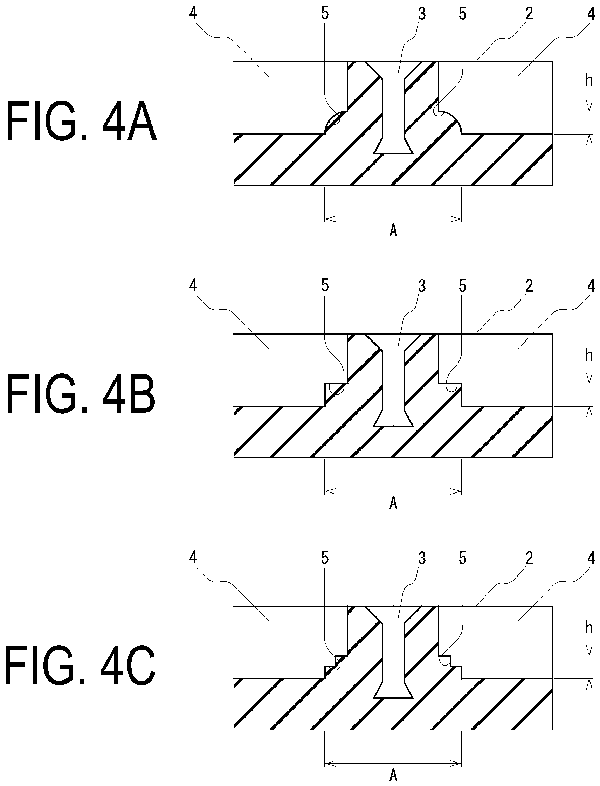

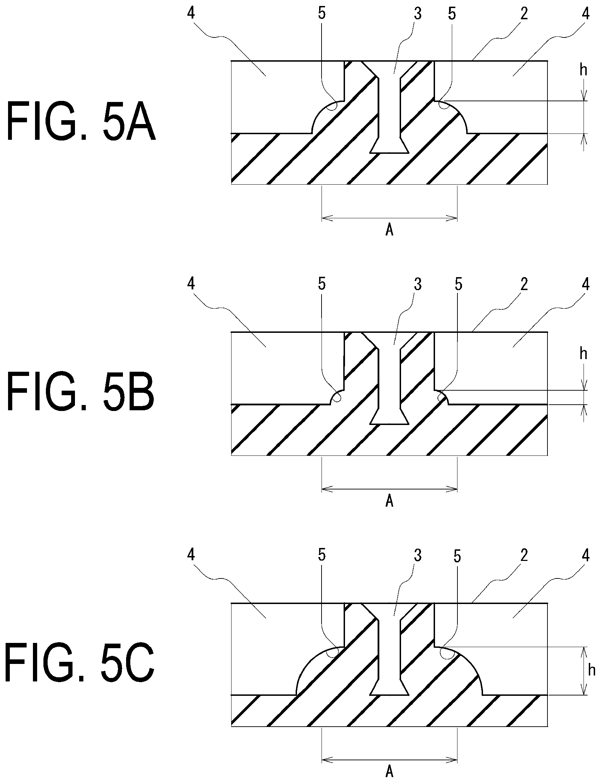

The shape of the raised bottom portion of the end portion of the sipe 4 is not limited to the example illustrated in FIG. 3B and, examples thereof include the shapes illustrated in FIGS. 4A to 4C and FIGS. 5A to 5C. FIG. 4A is an example in which the bottom edge portion of the sipe 4 is raised in an arcuate shape. FIG. 4B is an example in which the bottom edge portion of the sipe 4 is raised in a rectangular shape. FIG. 4C is an example in which the bottom edge portion of the sipe 4 is raised in a stepped shape. Furthermore, FIG. 5A is an example in which the bottom edge portion of the sipe 4 is raised in an arcuate shape, the raised bottom portion 5 is extended outside of the peripheral area A, and the maximum height h thereof is increased. FIG. 5B is an example in which the bottom edge portion of the sipe 4 is raised in an arcuate shape, the raised bottom portion 5 is formed in a portion of the peripheral area A, and the maximum height h thereof is decreased. FIG. 5C is an example in which the depth of the sipe 4 is increased and the bottom edge portion of the sipe 4 is raised in an arcuate shape, the raised bottom portion 5 is extended outside of the peripheral area A, and the maximum height h thereof is increased even more. Note that in FIG. 3B, FIGS. 4A to 4C, and FIGS. 5A to 5C, a configuration is illustrated in which the length of the peripheral area A on the dashed line X-X is 12 mm.

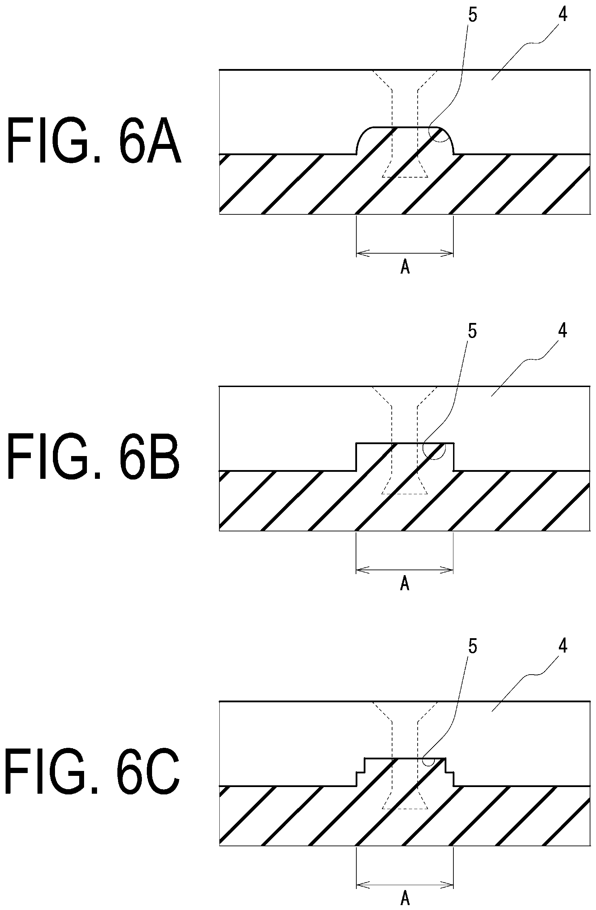

Additionally, the shape of the raised bottom portions of the sipes 4 disposed separated by an interval from the stud pin hole 3 that extend continuously through the peripheral area A is not limited to the example illustrated in FIG. 3C, and examples thereof include the shapes illustrated in FIGS. 6A to 6C. FIG. 6A is an example in which the bottom side of the sipe 4 in the peripheral area A is raised in a rectangular shape and the edges of the top side thereof are rounded, resulting in a rounded shape. FIG. 6B is an example in which the bottom side of the sipe 4 in the peripheral area A is raised in a rectangular shape. FIG. 6C is an example in which the bottom side of the sipe 4 in the peripheral area A is raised in a stepped shape.

In the present invention, the distance L from the surface of the block 2 to the bottom of the stud pin hole 3 and the depth of the sipe 4 may be appropriately determined from within a range typically applied to studded tires.

The present invention is further described below using Examples. However, the scope of the present invention is not limited to these Examples.

### Examples

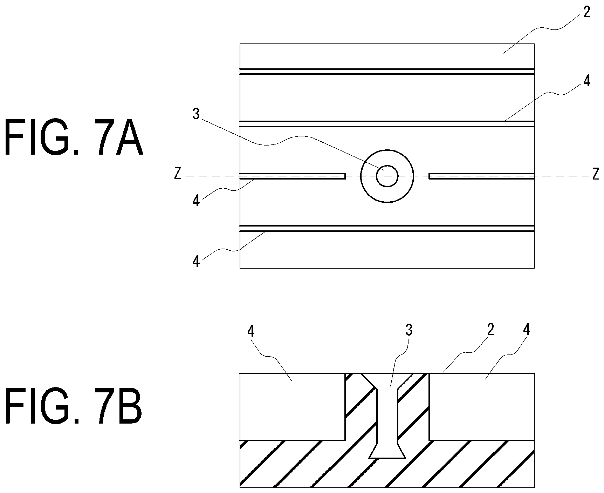

Seven types of pneumatic tires (tire size: 205/55R16; Conventional Example and Examples 1 to 6) were vulcanization molded. These tires included stud pin holes and sipes in the blocks of the tread, and the forms of the raised bottom portions in the sipes extending in the peripheral area of the stud pin hole were varied as shown in Table 1. As illustrated in FIGS. 7A and 7B, with the pneumatic tire of the Conventional Example, the sipes 4 in the peripheral area of the stud pin hole 3 do not include raised bottom portions. The pneumatic tires of Examples 1 to 6 each include raised bottom portions having the forms illustrated in FIGS. 3A, 3B, or 3C, and the sizes of each of the raised bottom portions is varied as shown in Table 1. In the table, the "raised bottom portion disposal proportion" is expressed as a percentage of the total length of the sipes in the peripheral area where the bottom is raised with respect to the entire length of the sipes present in the peripheral area; and the "maximum height h of raised bottom" is expressed as a ratio with respect to the distance L from the surface of the block to the bottom of the stud pin hole.

Studded tires were manufactured by driving stud pins into the stud pin holes of the pneumatic tires thus obtained. The resulting studded tires were mounted on a 2000 cc class FF vehicle and pin drop resistance and braking ability on ice were evaluated using the following methods.

### Pin drop resistance

Each of the pneumatic tires was mounted on the vehicle and the vehicle was driven for 10000 km on dry road surfaces including asphalt road surfaces and concrete road surfaces. The number of stud pins that had dropped from the tread of the pneumatic tires after the driving was counted. For each type of pneumatic tire, the inverse of the number of dropped stud pins was calculated and expressed as an index value, with the value of the Conventional Example being defined as 100. These values are shown in the "pin drop resistance" row of Table 1. Larger index values indicate that fewer stud pins were dropped and, thus, superior pin drop resistance.

### Braking ability on ice

Each of the pneumatic tires was mounted on the vehicle and driven on an icy road at an initial speed of 30 km/hr. Brakes were applied and the braking distance required to come to a complete stop was measured. For each type of pneumatic tire, the inverse of the breaking distance was calculated and expressed as an index value, with the value of the Conventional Example being defined as 100. These values are shown in the "braking ability on ice" row of Table 1. Larger index values indicate shorter braking distance and, thus, superior braking ability on ice.

**[Table 1]**

| | | Conventional Example | Example 1 | Example 2 | Example 3 | Example 4 | Example 5 | Example 6 |
|---|---|---|---|---|---|---|---|---|
| Presence/absence of bottom raised portion | - | Absent | Present | Present | Present | Present | Present | Present |
| Raised bottom portion disposal proportion | % | - | 30% | 60% | 90% | 90% | 90% | 90% |
| Maximum height h of raised bottom | - | - | 0.4L | 0.4L | 0.4L | 0.2L | 0.9L | 0.6L |
| Pin release resistance performance | Index value | 100 | 103 | 105 | 108 | 103 | 110 | 110 |
| Performance on ice | Index value | 100 | 103 | 103 | 105 | 103 | 100 | 108 |

With the pneumatic tires of Examples 1 to 6, it was confirmed that the stud pins were prevented from dropping out and that performance on snow and ice were enhanced to or beyond conventional levels.

### Reference Signs List

- 1: Tread portion
- 2: Block
- 3: Stud Pin
- 4: Sipe
- 5: Raised bottom portion
- 6: Tire circumferential direction groove
- 7: Tire width direction groove
- 10: Stud Pin
- A: Peripheral area of the stud pin hole
- L: Distance from tread surface to bottom of stud pin hole
- h: Maximum height of raised bottom portion

## Claims

1. A pneumatic tire, comprising:
in a tread, a plurality of blocks divided by grooves extending in a tire circumferential direction and grooves extending in a tire width direction; and
a plurality of sipes and a stud pin hole disposed in the blocks;
at least a portion of the sipes provided in a peripheral area of the stud pin hole comprising a raised bottom portion.

2. The pneumatic tire according to claim 1, wherein:
the peripheral area is located in a range of a 12 mm diameter from a center of the stud pin hole; and
a total of lengths of the sipes in the peripheral area where the raised bottom portion is provided is not less than 60% of an entire length of the sipes present in the peripheral area.

3. The pneumatic tire according to claim 1 or 2, wherein:
a maximum height h of the raised bottom portion of the sipes with respect to a distance L from a surface of a corresponding block to a bottom of the stud pin hole is not less than 0.3L and not greater than 0.8L.
